# FASCICULE DE BREVET EUROPEEN

(11) **EP 1 799 490 B1**
(45) Date de publication et mention de la délivrance du brevet: **15.12.2010**
(21) Numéro de dépôt: 05810704.6
(22) Date de dépôt: 05.10.2005
(51) Int. Cl.: B60L 11/18, H01M 8/04

(54) **INSTALLATION DE PRODUCTION D'ELECTRICITE COMPORTANT DES PILES A COMBUSTIBLE RELIEES EN SERIE ET COMPORTANT DES MOYENS POUR ISOLER UNE PILE ET PROCEDE DE PILOTAGE D'UNE TELLE INSTALLATION**
ELEKTRIZITÄTSHERSTELLUNGS-INSTALLATION MIT IN REIHE GESCHALTETEN BRENNSTOFFZELLEN UND MIT MITTELN ZUM ISOLIEREN EINER ZELLE UND VERFAHREN ZUR ÜBERWACHUNG EINER SOLCHEN INSTALLATION
ELECTRICITY PRODUCTION INSTALLATION COMPRISING FUEL CELLS CONNECTED IN SERIES AND COMPRISING MEANS FOR ISOLATING A CELL AND METHOD FOR MONITORING SUCH AN INSTALLATION

(30) Priorité: 07.10.2004 FR 0452295
(43) Date de publication de la demande: 27.06.2007
(73) Titulaire: RENAULT S.A.S., 92100 Boulogne Billancourt (FR)
(72) Inventeur: ESCORIHUELA, Emmanuelle, F-31490 BRAX (FR)
(86) Numéro de dépôt international: PCT/FR2005/050809
(87) Numéro de publication internationale: WO 2006/037924

(56) Documents cités:
- EP-A- 0 982 788
- DE-A1- 19 523 260
- JP-A- 2003 115 304
- US-A1- 2003 091 882
- US-A1- 2003 138 683
- US-A1- 2004 229 095
- US-A1- 2005 019 621
- US-B1- 6 677 066

## Description

L'invention concerne une installation de production de courant électrique pour un moteur électrique de traction de véhicule automobile comportant au moins deux piles à combustible reliées électriquement en série.

L'invention concerne plus particulièrement une installation de production de courant électrique, pour alimenter des organes électriques d'un véhicule, notamment un moteur électrique de traction, par l'intermédiaire de deux bornes de distribution d'électricité positive et négative de l'installation, qui comporte au moins deux piles à combustible comportant chacune un pôle négatif et un pôle positif, qui sont reliées électriquement en série entre les deux bornes de distribution d'électricité par l'intermédiaire de lignes de raccordement électriques dans lesquelles le courant électrique circule selon un sens de l'amont vers l'aval.

Il est connu d'embarquer à bord des véhicules électriques des piles à combustible pour alimenter des organes électriques du véhicule, notamment un moteur électrique de traction. Les piles à combustible permettent, entre autres avantages, de produire du courant électrique sans émettre de substances polluantes tout en garantissant une grande autonomie de fonctionnement du véhicule.

De manière connue, une pile à combustible est formée par un empilement axial de cellules élémentaires qui sont enserrées axialement entre deux plaques bipolaires d'extrémité. Les plaques bipolaires forment les pôles négatif et positif de la pile à combustible.

Chaque cellule comporte une cathode qui est destinée à être alimentée en comburant, et une anode qui est destinée à être alimentée en carburant. Le carburant est ici de l'hydrogène H₂, et le comburant est de l'oxygène O₂ contenu dans l'air atmosphérique.

Chaque cellule élémentaire est susceptible de produire un courant électrique de puissance déterminée. Les cellules ainsi empilées forment des générateurs de courant électrique continu qui sont montés en série entre les deux plaques bipolaires.

La puissance électrique maximale qui est susceptible d'être produite par la pile à combustible dépend donc du nombre de cellules élémentaires empilées.

En général, un empilement qui est destiné à fournir un courant électrique suffisamment puissant pour un moteur de traction, est axialement trop long pour être logé aisément dans le véhicule. C'est l'une des raisons pour lesquelles l'empilement est divisé en au moins deux empilements distincts formant ainsi deux "petites" piles à combustible, de longueur axiale inférieure, qui sont montées en série de façon à produire un courant électrique de même puissance qu'une pile à combustible "unique" de plus grande longueur.

Cependant, lorsque le véhicule est équipé de plusieurs piles à combustible montées en série, le dysfonctionnement d'une seule pile prive le véhicule du courant électrique que les autres piles sont toujours susceptibles de fournir.

US 6 677 066, US 2003 138 683 décrivent une installation de production de courant électrique comportant au moins deux piles à combustible reliées électriquement en série.

Pour résoudre ce problème, l'invention propose une installation de production de courant électrique du type décrit précédemment, **caractérisée en ce que** chaque ligne de raccordement comporte un interrupteur de raccordement qui est susceptible d'être commandé entre une position de fermeture et une position d'ouverture, et en ce qu'il comporte des lignes de contournement comportant chacune une extrémité amont raccordée à la ligne de raccordement directement en amont d'une pile à combustible associée, en amont de l'interrupteur de raccordement associé, et une extrémité aval raccordée à la ligne de raccordement directement en aval de la pile à combustible associée, en aval de l'interrupteur de raccordement associé, chaque ligne de contournement comportant un interrupteur de contournement, de façon à pouvoir isoler au moins une pile à combustible en commandant sélectivement la position des interrupteurs de raccordement et de contournement des lignes associées à cette pile.

Selon d'autres caractéristiques de l'invention :
- les interrupteurs de raccordement et de contournement et les lignes de contournement sont agencés à l'intérieur d'un boîtier ;
- les lignes de raccordement et les lignes de contournement comportent des composants semi-conducteurs unidirectionnels qui empêchent le courant électrique de circuler à contre-sens ;
- les composants semi-conducteurs sont agencés à l'intérieur du boîtier ;
- chaque ligne de raccordement qui est agencée directement en aval d'une pile à combustible, comporte un fusible qui est agencé en aval de l'interrupteur de raccordement associé ;
- le fusible est agencé à l'intérieur du boîtier ;
- le fusible est constitué par le composant semi-conducteur ;
- chaque ligne de raccordement comporte un tronçon externe au boîtier qui relie un pôle de pile à combustible jusqu'à l'interrupteur de raccordement associé par l'intermédiaire d'un connecteur qui est agencé dans une paroi du boîtier ;
- les deux tronçons externes associés aux deux pôles d'une même pile à combustible sont agencés parallèlement et à proximité l'un de l'autre de manière à minimiser l'intensité du champs magnétique produit par le passage du courant électrique dans ces tronçons externes ;
- chaque pôle d'une pile à combustible est constitué d'une plaque bipolaire, et chaque plaque bipolaire comporte au moins une borne de connexion au tronçon externe associé qui s'étend sensiblement dans le plan de la plaque bipolaire en saillie depuis un bord périphérique de la plaque bipolaire.

L'invention concerne aussi un procédé de pilotage de l'installation qui est **caractérisé en ce qu**'il comporte successivement les étapes suivantes :
- une étape de détection, au cours de laquelle des moyens de surveillance détectent qu'une pile à combustible est défectueuse ;
- une étape d'interruption de l'alimentation en carburant et en comburant de la pile à combustible détectée comme étant défectueuse ;
- une étape de déconnexion de l'installation de production de courant électrique par rapport au moteur électrique de manière que la circulation du courant électrique soit totalement interrompue dans les lignes ;
- une étape d'isolation de la pile à combustible défectueuse au cours de laquelle les interrupteurs de raccordement associés aux lignes de raccordement directement en amont et en aval de la pile défectueuse sont commandés vers leur position d'ouverture, et au cours de laquelle l'interrupteur de contournement associé à la ligne de contournement de la pile défectueuse est commandé vers sa position de fermeture de manière à court-circuiter la pile défectueuse ;
- une étape de reconnexion de l'installation de production de courant électrique au moteur.

Selon d'autres caractéristiques du procédé :
- lors de l'étape de déconnexion, les piles à combustible sont déconnectées en commandant l'ouverture des interrupteurs de raccordement associés aux lignes de raccordement qui sont raccordées aux bornes de distribution ;
- lors des étapes de déconnexion électrique et d'isolation, le moteur de traction est alimenté en électricité par des moyens auxiliaires de fourniture d'électricité ;
- les moyens auxiliaires de fourniture comportent une batterie.
- le procédé comporte une étape d'avertissement du conducteur qui est déclenchée lorsqu'une pile à combustible est détectée comme défectueuse lors de l'étape de détection et au cours de laquelle des moyens d'avertissement sont activés.

D'autres caractéristiques et avantages apparaîtront au cours de la lecture de la description détaillée qui suit pour la compréhension de laquelle on se reportera aux dessins annexés, parmi lesquels :
- la figure 1 représente schématiquement une installation de production de courant électrique selon l'invention qui comporte quatre piles à combustible reliées électriquement en série par des lignes de raccordement équipées d'interrupteurs, et qui comporte des lignes de contournement comportant des interrupteurs ;
- la figure 2 est une vue schématique qui représente une variante de l'invention dans laquelle les interrupteurs et les lignes de contournement sont agencés dans un boîtier de connexion.
- la figure 3 est une vue de dessus qui représente schématiquement l'agencement des interrupteurs dans le boîtier de connexion ;
- la figure 4 est une vue en perspective qui représente une pile à combustible des figures 1 et 2 ;
- la figure 5 est un schéma qui représente le procédé de pilotage de l'installation de production de courant électrique.

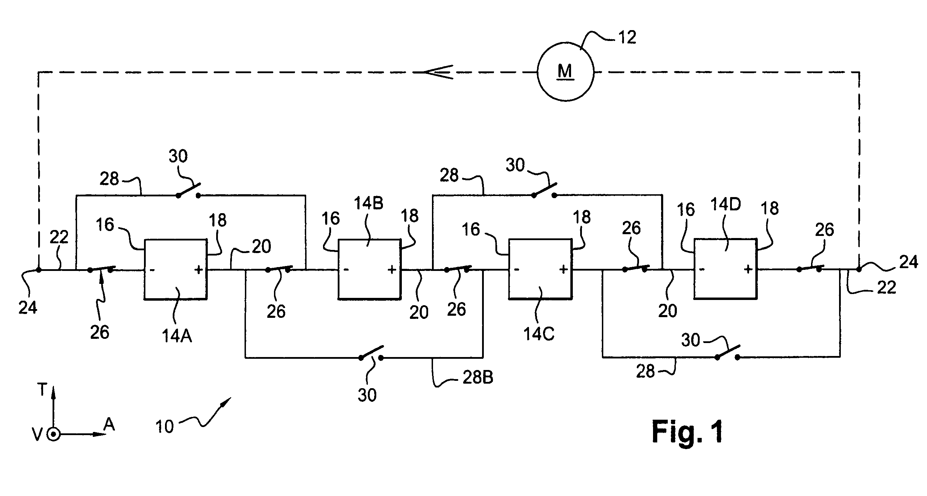

Dans la suite de la description, on adoptera à titre non limitatif une orientation axiale, verticale et transversale représentée par les flèches "A", "V", "T" des figures 1 à 4.

On adoptera à titre non limitatif un sens de circulation de l'amont vers l'aval du courant dans les lignes de raccordement qui est orienté depuis le pôle positif d'une pile à combustible vers le pôle négatif de la pile suivante.

On a représenté à la figure 1 une installation 10 de production de courant électrique. L'installation 10 est embarquée à bord d'un véhicule automobile, par exemple dans le compartiment moteur de ce dernier.

L'installation 10 est destinée à fournir du courant électrique à des organes électriques embarqués à bord du véhicule, notamment à un moteur électrique de traction 12.

L'installation 10 comporte ici quatre piles à combustible 14. Afin de simplifier la description, les piles à combustible sont ici alignées axialement et elles sont référencées 14A, 14B, 14C, 14D dans leur ordre de rangement selon la direction axial. L'invention n'est cependant pas limitée à cet agencement.

Le nombre de piles à combustible 14 est donné à titre d'exemple non limitatif, l'installation 10 comportant au moins deux piles à combustible 14.

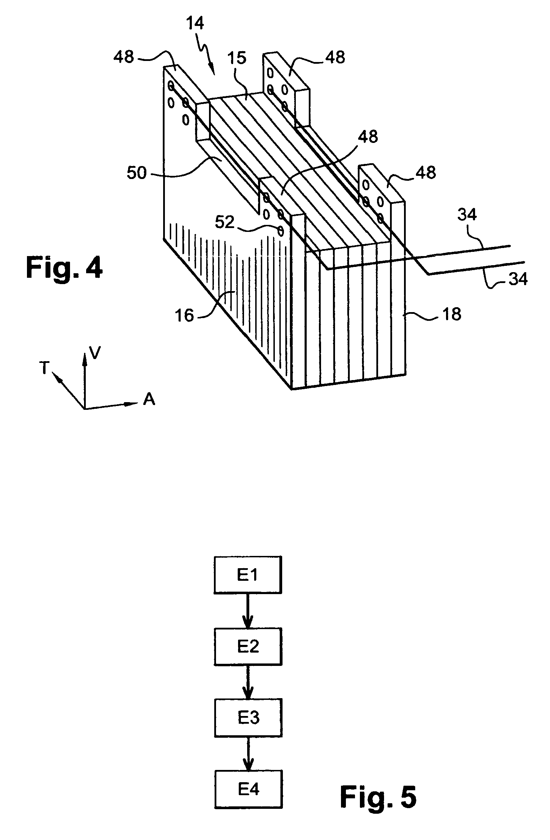

Comme représenté à la figure 4, chaque pile à combustible 14 est réalisée par un empilement axial de cellules élémentaires 15 qui sont enserrées axialement entre deux plaques bipolaires d'extrémité 16, 18 qui forment respectivement un pôle négatif 16 et un pôle positif 18 de la pile à combustible 14.

Chaque pile à combustible 14 est alimentée en carburant et en comburant par deux circuits d'alimentation (non représentés). Par exemple, le carburant est de l'hydrogène H₂ et le comburant est de l'air atmosphérique contenant notamment de l'oxygène O₂. Le pilotage des débits de carburant et de comburant permet de commander la puissance électrique que fournissent les piles à combustible 14.

Les piles à combustible 14 sont reliées électriquement en série par l'intermédiaire de lignes de raccordement 20. Ainsi, comme représenté à la figure 1, l'installation 10 comporte ici trois lignes de raccordement 20 dont une extrémité amont est reliée au pôle positif d'une première pile à combustible 14A, 14B, 14C, et dont la seconde extrémité aval est reliée au pôle négatif de la pile à combustible suivante 14B, 14C, 14D.

L'installation 10 comporte en outre deux lignes de raccordement d'extrémité 22 amont et aval qui relient respectivement le pôle négatif 16 de la première pile à combustible 14A à une première borne de distribution 24 de courant électrique, et le pôle positif 18 de la dernière pile à combustible 14D à une seconde borne de distribution 24. Ces lignes de raccordement d'extrémité 22 sont ainsi reliées à des bornes de distribution 24 positive et négative qui sont destinées à être reliées au circuit d'alimentation du moteur de traction électrique 12. Ainsi les piles à combustible 14 sont reliées électriquement en série entre les bornes de distribution 24.

Selon les enseignements de l'invention, un interrupteur de raccordement 26 est intercalé dans chacune des lignes de raccordement 20, 22. Chaque interrupteur de raccordement 26 est susceptible d'être commandé indépendamment des autres entre une position de fermeture dans laquelle le courant électrique est susceptible de circuler dans la ligne de raccordement 20, 22 associée, et une position d'ouverture dans laquelle le courant électrique ne peut pas circuler.

L'installation 10 comporte aussi quatre lignes de contournement 28 qui sont chacune associées à une pile à combustible 14.

Ainsi l'extrémité amont de chaque ligne de contournement 28 est raccordée à la ligne de raccordement 20, 22 située directement en amont de la pile à combustible 14 associée, et plus précisément en amont de l'interrupteur de raccordement 26 de la ligne de raccordement amont 20, 22.

L'extrémité aval de chaque ligne de contournement 28 est raccordée à la ligne de raccordement 20, 22 située directement en aval de la pile à combustible 14 associée, et plus précisément en aval de l'interrupteur de raccordement 26 de la ligne de raccordement aval 20, 22.

Chaque ligne de contournement 28 est ainsi agencée en parallèle par rapport à la pile à combustible associée 14A, 14B, 14C ou 14D de manière à connecter directement la ligne de raccordement amont 20, 22 à la ligne de raccordement aval 20, 22 en court-circuitant ou en contournant la pile à combustible 14 associée.

Chaque ligne de contournement 28 comporte en outre un interrupteur de contournement 30 qui est susceptible d'être commandé entre une position d'ouverture et une position de fermeture de façon analogue à ce qui est décrit pour les interrupteurs de raccordement 26 des lignes de raccordement 20, 22.

Ainsi, lorsque les interrupteurs de raccordement 26 sont en position de fermeture et que les interrupteurs de contournement 30 sont en position d'ouverture, les piles à combustible 14 sont toutes reliées électriquement en série les unes aux autres.

En commandant sélectivement les interrupteurs de raccordement 26 et de contournement 30, il est possible d'isoler une ou plusieurs piles à combustible 14 tout en permettant aux autres piles à combustible 14 de fournir du courant électrique aux bornes de distribution 24.

Ainsi, si l'on veut isoler une pile à combustible 14B, par exemple parce qu'elle elle est défectueuse, les interrupteurs de raccordement 26 des lignes de raccordement 22 directement en amont et en aval de la pile à combustible 14B sont commandés vers leur position d'ouverture, tandis que l'interrupteur de contournement 30 de la ligne de contournement 28B associée à la pile à combustible 14B est commandé vers sa position de fermeture.

Le moteur 12 est toujours alimenté par les trois autres piles à combustible 14A, 14C, 14D. Le courant électrique n'est pas interrompu par la pile à combustible 14B défaillante, mais il la contourne en circulant dans la ligne de contournement 28B.

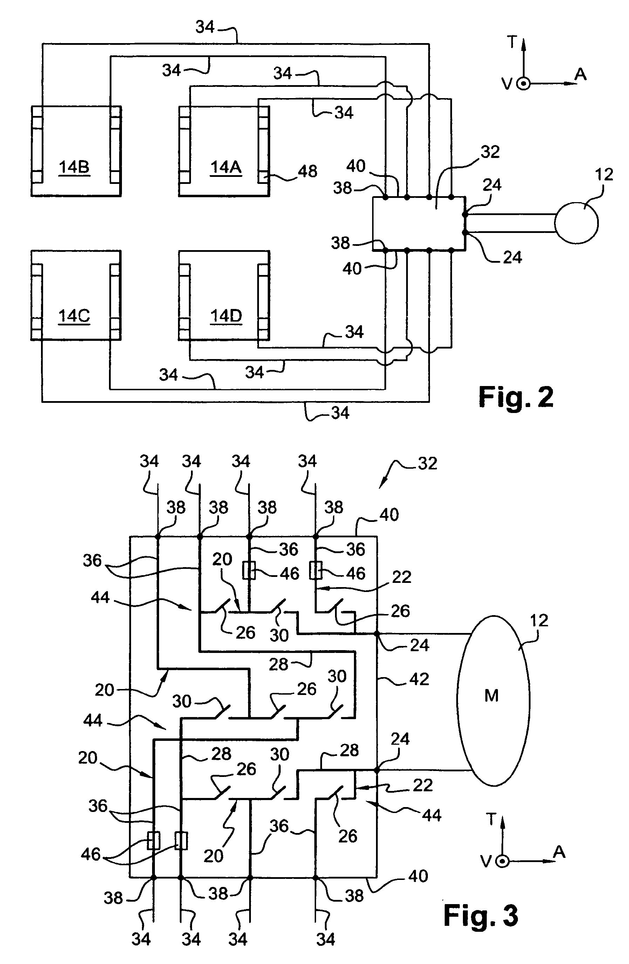

On a représenté à la figure 2 un second mode de réalisation de l'invention.

Les quatre piles à combustible 14A, 14B, 14C et 14D sont ici agencées par paires 14A, 14B et 14C, 14D selon deux rangées parallèles d'orientation axiale.

L'installation 10 comporte en outre un boîtier de connexion 32 qui est destiné à connecter électriquement en série les quatre piles à combustible 14A, 14B, 14C et 14D. A cet effet, les piles à combustible 14 sont connectées électriquement à des connecteurs 38 qui sont ici agencés dans deux parois latérales 40 opposées du boîtier de connexion 32 par l'intermédiaire de lignes de raccordement externes 34.

Chaque paroi latérale 40 comporte ainsi deux paires de connecteurs 38. Les pôles 16, 18 d'une même pile à combustible 14 sont reliés respectivement aux connecteurs d'une même paire de connecteurs 38 par l'intermédiaire des lignes de raccordement externes 34 associées.

Une paroi d'extrémité 42 du boîtier comporte deux connecteurs 24 formant les bornes de distribution 24 du premier mode de réalisation qui sont reliées électriquement au moteur électrique de traction 12.

Comme représenté à la figure 3, le boîtier 32 comporte les lignes de raccordement 20, 22 et de contournement 30 ainsi que les interrupteurs associés de raccordement 26 et de contournement 30 déjà décrits précédemment, de manière que les piles à combustible 14 soient connectées en série entre elles et de manière qu'il soit possible d'en isoler au moins une, tel que décrit précédemment.

Le boîtier comporte ainsi un tronçon interne 36 des lignes de raccordement 20, 22 qui est équipé de l'interrupteur de raccordement 26 associé et les lignes de contournement 28 qui sont équipées des interrupteurs de contournement 30.

Les lignes de raccordement externes 34 sont prolongées par les lignes de raccordement internes 36 de manière que les piles à combustible 14 soient reliées électriquement en série de la même manière que dans le premier mode de réalisation. Ainsi, les lignes de raccordement 20, 22 décrites dans le premier mode de réalisation sont ici constituées d'un tronçon externe 34 et d'un tronçon interne au boîtier 36 qui sont reliés électriquement par l'intermédiaire du connecteur électrique 38 associé agencé dans la paroi 40 du boîtier 32.

De manière avantageuse, comme illustré à la figure 3, les interrupteurs de raccordement 26 et de contournement 30 sont agencés selon trois barrettes 44 parallèles d'orientation axiale qui comportent chacune trois interrupteurs 26, 30 qui sont reliés en série. Dans l'exemple montré à la figure 3, chaque barrette latérale 44 comporte deux interrupteurs de raccordement 26 qui sont raccordés par l'intermédiaire d'un interrupteur de contournement 30, tandis que la barrette centrale 44 comporte deux interrupteurs de contournement 30 qui sont raccordés par l'intermédiaire d'un interrupteur de raccordement 26.

Comme illustré à la figure 3, les lignes de raccordement 20, 22 comportent avantageusement un fusible 46 afin d'éviter que le boîtier 12 ne soit soumis à des puissances électriques trop élevées qui risquent de l'endommager.

Les fusibles 42 sont avantageusement intercalés, à l'intérieur du boîtier 12, sur les lignes de raccordement internes 36 qui relient les interrupteurs de raccordement 26 aux pôles positifs 18 des piles à combustible 14.

Selon une variante non représentée, afin d'empêcher le courant électrique de circuler à contre-sens, c'est-à-dire selon un sens de l'aval vers l'amont, depuis un pôle négatif 16 vers un pôle positif 18, un composant semi-conducteur (non représenté) peut être intercalé sur les lignes de raccordement 20, 22, par exemple à l'intérieur du boîtier 12 sur les lignes de raccordement internes 36 qui relient les pôles positifs 18 des piles à combustible 14 aux interrupteurs de raccordement 26.

Selon une autre variante non représentée, le fusible 46 et le composant semi-conducteur sont constitués par un unique élément remplissant ces deux fonctions.

Selon un autre aspect de l'invention, le courant électrique fourni par les piles à combustible 14 est susceptible de subir de faibles variations d'intensité à haute fréquence, ce qui crée des ondes électromagnétiques. En se reportant à la figure 2, on peut voir que les deux lignes de raccordement externes 34 associés à une même pile à combustible 14 sont avantageusement agencées parallèlement à proximité l'une de l'autre de manière que les ondes électromagnétiques émises par chacune de ces lignes de raccordement externes 34 s'annulent globalement entre elles.

Selon encore un autre aspect de l'invention, chaque plaque bipolaire 16, 18 des piles à combustible 14 comporte une borne de connexion 48 qui s'étend dans le plan transversal vertical de la plaque bipolaire 16, 18 en saillie depuis un bord périphérique 50, comme représenté à la figure 4.

Les bornes de connexion 48 s'étendent ici verticalement vers le haut depuis le bord périphérique transversal supérieur 50 de la plaque bipolaire 16, 18. La plaque bipolaire 16, 18 comporte deux bornes de connexion 48 qui sont agencées aux deux extrémités transversales de ce bord 50, et sur lesquelles une même ligne de raccordement externe 34 est fixée fermement en deux points de fixation.

Ces bornes de connexion 48 permettent notamment de faciliter la fixation des lignes de raccordement 34 aux plaques bipolaires ou pôles 16, 18 des piles à combustible 14, par exemple par l'intermédiaire de vis de fixation (non représentées) qui sont vissées dans des orifices de fixation 52 correspondant des bornes de connexion 48.

De façon avantageuse, les orifices de fixation 52 de chaque borne de connexion 48 sont répartis verticalement selon deux niveaux haut et bas de façon à faciliter la répartition dans l'espace des lignes de raccordement externes des différentes piles à combustible 14A, 14B, 14C et 14D.

Ainsi, comme illustré à la figure 4, il est possible de fixer une première ligne de raccordement externe 34 au niveau bas des bornes de connexion 48 de la plaque bipolaire négative 16 de la pile à combustible 14, tandis qu'une seconde ligne de raccordement externe 34 est fixée au niveau haut des bornes de connexion 48 de la plaque bipolaire positive 18 de la pile à combustible 14. Ces lignes de raccordement externes 34 sont alors agencées verticalement l'une sous l'autre sans qu'il soit nécessaire de les couder pour obtenir cet agencement.

L'invention concerne aussi un procédé de pilotage de l'installation de production d'électricité 10 selon l'un quelconque des modes de réalisation précédemment décrit.

Le procédé qui est représenté schématiquement à la figure 5 comporte principalement quatre étapes.

Lors d'une première étape E1 de détection, des moyens de surveillance (non représentés) détectent qu'une pile à combustible 14A, 14B, 14C ou 14D est défectueuse.

Lorsque le résultat de la première étape de détection E1 est positif, c'est-à-dire qu'une pile à combustible est détectée comme étant défectueuse, une étape E2 d'interruption est enclenchée. Au cours de cette deuxième étape E2 d'interruption, l'alimentation en carburant et en comburant de la pile défectueuse 14A, 14B, 14C ou 14D, est interrompue, notamment afin de ne pas gaspiller inutilement les ressources en carburant et en comburant.

Cette deuxième étape E2 est suivie d'une troisième étape E3 de déconnexion électrique de l'installation de production de courant électrique 10 par rapport au moteur électrique 12, au cours de laquelle l'ensemble des piles à combustible 14 est isolé des différents organes électriques du véhicule de manière qu'aucun courant électrique ne circule dans le boîtier de connexion 32 ou, de manière générale, dans les interrupteurs de raccordement 26 et de contournement 30.

Les piles à combustible 14A, 14B, 14C et 14D sont par exemple déconnectées en commandant les interrupteurs de raccordement 26 associés aux lignes extrêmes de raccordement amont et aval 22 vers leur position d'ouverture.

Lorsque la troisième étape E3 est accomplie, une quatrième étape E4 d'isolation de la pile à combustible défectueuse 14A, 14B, 14C ou 14D est déclenchée. Au cours de cette quatrième étape E4, les interrupteurs de raccordement 26 qui sont associés aux lignes de raccordement 20, 22 directement en amont et en aval de la pile défectueuse 14A, 14B, 14C ou 14D sont commandés vers leur position d'ouverture, et l'interrupteur de contournement 30 qui est associé à la ligne de contournement 28 de la pile défectueuse 14A, 14B, 14C ou 14D est commandé vers sa position de fermeture.

Les piles à combustible 14 ayant été déconnectées des organes électriques du véhicule lors de la troisième étape E3, aucun courant électrique ne circule dans le boîtier 32. Ainsi, le basculement des interrupteurs de raccordement 26 et de contournement 30 d'une position à l'autre ne risque pas de créer des arcs électriques susceptibles de provoquer le départ d'un incendie.

A la fin de la quatrième étape E4, la pile à combustible défectueuse 14A, 14B, 14C ou 14D est isolée, et les piles à combustible actives 14 peuvent être reconnectées aux organes électriques du véhicule en toute sécurité lors d'une dernière étape E5 de reconnexion du moteur 12 aux piles à combustible 14 encore actives.

Selon une variante non représentée de l'invention, afin de ne pas interrompre totalement le fonctionnement des organes électriques du véhicule, notamment du moteur électrique 12, lors des étapes de déconnexion électrique E3 et d'isolation E4, le véhicule comporte des moyens auxiliaires de fourniture d'électricité (non représentés), tels qu'une batterie ou un accumulateur. Le moteur électrique de traction 12 peut ainsi être alimenté en électricité par ces moyens auxiliaires.

Afin de prévenir le conducteur du véhicule que l'installation de production d'électricité 10 est défectueuse et qu'il est nécessaire de réparer ou de remplacer une pile à combustible, on peut prévoir une étape d'avertissement du conducteur qui est déclenchée lorsqu'une pile à combustible est détectée comme étant défectueuse lors de l'étape de détection E1. Au cours de cette étape d'avertissement, des moyens d'avertissement sont activés dans l'habitacle du véhicule tels qu'un témoin lumineux qui agencé sur le tableau de bord et/ou un signal sonore.

## Revendications

1. Installation (10) de production de courant électrique, pour alimenter des organes électriques d'un véhicule, notamment un moteur électrique de traction (12), par l'intermédiaire de deux bornes (24) de distribution d'électricité positive et négative de l'installation (10), qui comporte au moins deux piles à combustible (14) comportant chacune un pôle négatif (16) et un pôle positif (18), qui sont reliées électriquement en série entre les deux bornes de distribution d'électricité (24) par l'intermédiaire de lignes de raccordement électriques (20, 22) dans lesquelles le courant électrique circule selon un sens de l'amont vers l'aval,
**caractérisée en ce que** chaque ligne de raccordement (20, 22) comporte un interrupteur (26) de raccordement qui est susceptible d'être commandé entre une position de fermeture et une position d'ouverture, et **en ce qu'**il comporte des lignes de contournement (28) comportant chacune une extrémité amont raccordée à la ligne de raccordement (20, 22) directement en amont d'une pile à combustible (14) associée, en amont de l'interrupteur de raccordement (26) associé, et une extrémité aval raccordée à la ligne de raccordement (20, 22) directement en aval de la pile à combustible (14) associée, en aval de l'interrupteur de raccordement (26) associé, chaque ligne de contournement (28) comportant un interrupteur de contournement (30), de façon à pouvoir isoler au moins une pile à combustible (14) en commandant sélectivement la position des interrupteurs de raccordement et de contournement (26, 30) des lignes (20, 22, 28) associées à cette pile (14).

2. Installation (10) selon la revendication précédente, **caractérisée en ce que** les interrupteurs de raccordement et de contournement (26, 30) et les lignes de contournement (28) sont agencés à l'intérieur d'un boîtier (32).

3. Installation (10) selon la revendication précédente, **caractérisée en ce que** les lignes de raccordement (20, 22) et les lignes de contournement (30) comportent des composants semi-conducteurs unidirectionnels qui empêchent le courant électrique de circuler à contre-sens.

4. Installation (10) selon la revendication précédente, **caractérisée en ce que** les composants semi-conducteurs sont agencés à l'intérieur du boîtier (32).

5. Installation (10) selon l'une quelconque des revendications 2 à 4, **caractérisée en ce que** chaque ligne de raccordement (20, 22) qui est agencée directement en aval d'une pile à combustible (14), comporte un fusible (46) qui est agencé en aval de l'interrupteur de raccordement (26) associé.

6. Installation (10) selon la revendication précédente, **caractérisée en ce que** le fusible (46) est agencé à l'intérieur du boîtier (32).

7. Installation (10) selon la revendication précédente prise en combinaison avec la revendication 3, **caractérisée en ce que** le fusible (46) est constitué par le composant semi-conducteur.

8. Installation (10) selon l'une quelconque des revendications 2 à 7, **caractérisée en ce que** chaque ligne de raccordement (20, 22) comporte un tronçon externe (34) au boîtier (32) qui relie un pôle (16, 18) de pile à combustible (14) jusqu'à l'interrupteur de raccordement (26) associé par l'intermédiaire d'un connecteur (38) qui est agencé dans une paroi (40) du boîtier (32).

9. Installation (10) selon la revendication précédente, **caractérisée en ce que** les deux tronçons externes (34) associés aux deux pôles (16, 18) d'une même pile à combustible (14) sont agencés parallèlement et à proximité l'un de l'autre de manière à minimiser l'intensité du champs magnétique produit par le passage du courant électrique dans ces tronçons externes (34).

10. Installation (10) selon l'une quelconque des revendications précédentes, **caractérisée en ce que** chaque pôle (16, 18) d'une pile à combustible (14) est constitué d'une plaque bipolaire (16, 18), et **en ce que** chaque plaque bipolaire (16, 18) comporte au moins une borne de connexion (48) au tronçon externe (34) associé qui s'étend sensiblement dans le plan de la plaque bipolaire (16, 18) en saillie depuis un bord périphérique (50) de la plaque bipolaire.

11. Procédé de pilotage de l'installation (10) selon l'une quelconque des revendications 1 à 10, du type dans laquelle chaque pile à combustible (14) est alimentée en carburant et en comburant, **caractérisé en ce qu'**il comporte successivement les étapes suivantes :
- une étape de détection (E1), au cours de laquelle des moyens de surveillance détectent qu'une pile à combustible (14) est défectueuse ;
- une étape (E2) d'interruption de l'alimentation en carburant et en comburant de la pile à combustible (14) détectée comme étant défectueuse ;
- une étape (E3) de déconnexion de l'installation de production de courant électrique (10) par rapport au moteur électrique (12) de manière que la circulation du courant électrique soit totalement interrompue dans les lignes (20, 22, 28) ;
- une étape (E4) d'isolation de la pile à combustible défectueuse au cours de laquelle les interrupteurs de raccordement (26) associés aux lignes de raccordement (20, 22) directement en amont et en aval de la pile défectueuse (14) sont commandés vers leur position d'ouverture, et au cours de laquelle l'interrupteur de contournement (30) associé à la ligne de contournement (28) de la pile défectueuse (14) est commandé vers sa position de fermeture de manière à court-circuiter la pile défectueuse (14) ;
- une étape (E5) de reconnexion de l'installation de production de courant électrique (10) au moteur (12).

12. Procédé selon la revendication précédente, **caractérisé en ce que** lors de l'étape de déconnexion (E3), les piles à combustible (14) sont déconnectées en commandant l'ouverture des interrupteurs de raccordement (26) associés aux lignes de raccordement (22) qui sont raccordées aux bornes de distribution (24).

13. Procédé selon l'une quelconque des revendications 11 ou 12, **caractérisé en ce que** lors des étapes de déconnexion électrique (E3) et d'isolation (E4), le moteur de traction (12) est alimenté en électricité par des moyens auxiliaires de fourniture d'électricité.

14. Procédé selon la revendication précédente, **caractérisé en ce que** les moyens auxiliaires de fourniture comportent une batterie.

15. Procédé selon l'une quelconque des revendications 11 à 14, **caractérisé en ce qu'**il comporte une étape d'avertissement du conducteur qui est déclenchée lorsqu'une pile à combustible (14) est détectée comme défectueuse lors de l'étape de détection (E1) et au cours de laquelle des moyens d'avertissement sont activés.

## Claims

1. Electric current production installation (10) for powering electrical units of a vehicle, in particular an electric drive motor (12), via two, positive and negative, electricity distribution terminals (24) of the installation (10), which comprises at least two fuel cells (14) each comprising a negative pole (16) and a positive pole (18), which are electrically linked in series between the two electricity distribution terminals (24) via electrical connection lines (20, 22) in which the electric current circulates in an upstream to downstream direction,
**characterized in that** each connection line (20, 22) comprises a connecting switch (26) which can be controlled between a closed position and an open position, and **in that** it comprises bypass lines (28), each comprising an upstream end connected to the connection line (20, 22) directly upstream of an associated fuel cell (14), upstream of the associated connecting switch (26), and a downstream end connected to the connection line (20, 22) directly downstream of the associated fuel cell (14), downstream of the associated connecting switch (26), each bypass line (28) comprising a bypass switch (30), so as to be able to isolate at least one fuel cell (14) by selectively controlling the position of the connecting and bypass switches (26, 30) of the lines (20, 22, 28) associated with this cell (14).

2. Installation (10) according to the preceding claim, **characterized in that** the connecting and bypass switches (26, 30) and the bypass lines (28) are arranged inside an enclosure (32).

3. Installation (10) according to the preceding claim, **characterized in that** the connection lines (20, 22) and the bypass lines (28) comprise unidirectional semiconductor components which prevent the electric current from circulating in the wrong direction.

4. Installation (10) according to the preceding claim, **characterized in that** the semiconductor components are arranged inside the enclosure (32).

5. Installation (10) according to any one of Claims 2 to 4, **characterized in that** each connection line (20, 22) which is arranged directly downstream of a fuel cell (14) comprises a fuse (46) which is arranged downstream of the associated connecting switch (26).

6. Installation (10) according to the preceding claim, **characterized in that** the fuse (46) is arranged inside the enclosure (32).

7. Installation (10) according to the preceding claim taken in conjunction with Claim 3, **characterized in that** the fuse (46) comprises the semiconductor component.

8. Installation (10) according to any one of Claims 2 to 7, **characterized in that** each connection line (20, 22) comprises a section (34) external to the enclosure (32) which links a pole (16, 18) of a fuel cell (14) to the associated connecting switch (26) via a connector (38) which is arranged in a wall (40) of the enclosure (32).

9. Installation (10) according to the preceding claim, **characterized in that** the two external sections (34) associated with the two poles (16, 18) of one and the same fuel cell (14) are arranged in parallel and close to one another so as to minimize the intensity of the magnetic field produced by the passage of the electric current in these external sections (34).

10. Installation (10) according to any one of the preceding claims, **characterized in that** each pole (16, 18) of a fuel cell (14) comprises a bipolar plate (16, 18), and **in that** each bipolar plate (16, 18) comprises at least one terminal (48) connecting to the associated external section (34) which extends roughly in the plane of the bipolar plate (16, 18) projecting from a peripheral edge (50) of the bipolar plate.

11. Method of controlling the installation (10) according to any one of Claims 1 to 10, of the type wherein each fuel cell (14) is fed with fuel and with oxidant, **characterized in that** it comprises the following steps in succession:
- a detection step (E1), during which monitoring means detect that a fuel cell (14) is defective;
- a step (E2) for stopping the supply of fuel and oxidant to the fuel cell (14) detected as being defective;
- a step (E3) for disconnecting the electric current production installation (10) from the electric motor (12) so that the circulation of the electric current is totally stopped in the lines (20, 22, 28);
- a step (E4) for isolating the defective fuel cell during which the connecting switches (26) associated with the connection lines (20, 22) directly upstream and downstream of the defective cell (14) are ordered to their open position, and during which the bypass switch (30) associated with the bypass line (28) of the defective cell (14) is ordered to its closed position so as to short circuit the defective cell (14);
- a step (E5) for reconnecting the electric current production installation (10) to the motor (12).

12. Method according to the preceding claim, **characterized in that**, in the disconnection step (E3), the fuel cells (14) are disconnected by ordering the opening of the connecting switches (26) associated with the connection lines (22) that are connected to the distribution terminals (24).

13. Method according to either of Claims 11 or 12, **characterized in that**, in the electrical disconnection (E3) and isolation (E4) steps, the drive motor (12) is supplied with electricity by auxiliary electricity supply means.

14. Method according to the preceding claim, **characterized in that** the auxiliary supply means comprise a battery.

15. Method according to any one of Claims 11 to 14, **characterized in that** it comprises a step for warning the driver that is triggered when a fuel cell (14) is detected as defective in the detection step (E1) and during which warning means are activated.

## Patentansprüche

1. Anlage (10) zur Erzeugung von elektrischem Strom zur Versorgung der elektrischen Komponenten eines Fahrzeugs, insbesondere eines elektrischen Traktionsmotors (12) mittels zweier Elektrizitätsverteilungsanschlüsse (24), eines positiven und eines negativen, der Anlage (10), der mindestens zwei Brennstoffzellen (14) enthält, die jeweils einen negativen Pol (16) und einen positiven Pol (18) enthalten, welche zwischen den beiden Elektrizitätsverteilungsanschlüssen (24) mittels elektrischer Verbindungsleitungen (20, 22), in denen elektrischer Strom von stromaufwärts nach stromabwärts fließt, elektrisch in Reihe geschaltet sind,
**dadurch gekennzeichnet, dass** jede Verbindungsleitung (20, 22) einen Verbindungsschalter (26) enthält, der zwischen einer Schließstellung und einer Öffnungsstellung geschaltet werden kann, und dass sie Umgehungsleitungen (28) enthält, die jeweils ein stromaufwärtiges Ende aufweisen, das stromaufwärts des zugehörigen Verbindungsschalters (26) direkt stromaufwärts einer zugehörigen Brennstoffzelle (14) mit der Verbindungsleitung (20, 22) verbunden ist, sowie ein stromabwärtiges Ende, das stromabwärts des zugehörigen Verbindungsschalters (26) direkt stromabwärts der zugehörigen Brennstoffzelle (14) mit der Verbindungsleitung (20, 22) verbunden ist, wobei jede Umgehungsleitung (28) einen Umgehungsschalter (30) aufweist, so dass mindestens eine Brennstoffzelle (14) isoliert werden kann, indem die Stellung der Verbindungs- und Umgehungsschalter (26, 30) der dieser Zelle (14) zugeordneten Leitungen (20, 22, 28) gezielt geschaltet werden kann.

2. Anlage (10) nach dem vorhergehenden Anspruch, **dadurch gekennzeichnet, dass** die Verbindungs- und Umgehungsschalter (26, 30) und die Umgehungsleitungen (28) im Inneren eines Gehäuses (32) angeordnet sind.

3. Anlage (10) nach dem vorhergehenden Anspruch, **dadurch gekennzeichnet, dass** die Verbindungsleitungen (20, 22) und die Umgehungsleitungen (28) unidirektionale Halbleiterbauelemente enthalten, die einen Fluss des elektrischen Stroms in die Gegenrichtung verhindern.

4. Anlage (10) nach dem vorhergehenden Anspruch, **dadurch gekennzeichnet, dass** die Halbleiterbauelemente im Inneren des Gehäuses (32) angeordnet sind.

5. Anlage (10) nach einem der Ansprüche 2 bis 4, **dadurch gekennzeichnet, dass** jede Verbindungsleitung (20, 22), die direkt stromabwärts einer Brennstoffzelle (14) angeordnet ist, eine Sicherung (46) enthält, die stromabwärts des zugehörigen Verbindungsschalters (26) angeordnet ist.

6. Anlage (10) nach dem vorhergehenden Anspruch, **dadurch gekennzeichnet, dass** die Sicherung (46) im Inneren des Gehäuses (32) angeordnet ist.

7. Anlage (10) nach dem vorhergehenden Anspruch in Kombination mit Anspruch 3, **dadurch gekennzeichnet, dass** die Sicherung (46) aus dem Halbleiterbauelement besteht.

8. Anlage (10) nach einem der Ansprüche 2 bis 7, **dadurch gekennzeichnet, dass** jede Verbindungsleitung (20, 22) einen außerhalb des Gehäuses (32) liegenden Abschnitt (34) enthält, der einen Pol (16, 18) der Brennstoffzelle (14) mittels eines Verbinders (38), der in einer Wand (40) des Gehäuses (32) angeordnet ist, mit dem zugehörigen Verbindungsschalter (26) verbindet.

9. Anlage (10) nach dem vorhergehenden Anspruch, **dadurch gekennzeichnet, dass** die beiden zugehörigen Außenabschnitte (34), die den beiden Polen (16, 18) einer gleichen Brennstoffzelle (14) zugeordnet sind, parallel zu und in der Nähe zueinander angeordnet sind, um die Stärke des durch das Passieren des elektrischen Stroms in diesen Außenabschnitten (34) erzeugten Magnetfelds auf ein Minimum zu reduzieren.

10. Anlage (10) nach einem der vorhergehenden Ansprüche, **dadurch gekennzeichnet, dass** jeder Pol (16, 18) einer Brennstoffzelle (14) aus einer bipolaren Platte (16, 18) besteht und dass jede bipolare Platte (16, 18) mindestens einen Verbindungsanschluss (48) zur Verbindung mit dem zugehörigen Außenabschnitt (34) enthält, der sich im Wesentlichen in der Ebene der bipolaren Platte (16, 18) von einem Umfangsrand (50) der bipolaren Platte (16, 18) vorragend erstreckt.

11. Verfahren zum Bedienen der Anlage (10) nach einem der Ansprüche 1 bis 10 jener Art, bei der jede Brennstoffzelle (14) mit Brennstoff und mit einem die Verbrennung bewirkenden Mittel versorgt wird, **dadurch gekennzeichnet, dass** es nacheinander die folgenden Schritte umfasst:
- einen Erfassungsschritt (E1), während dessen Überwachungsmittel erfassen, dass eine Brennstoffzelle (14) fehlerhaft ist;
- einen Schritt (E2) der Unterbrechung der Versorgung der Brennstoffzelle (14), die als fehlerhaft erfasst wurde, mit Brennstoff und dem die Verbrennung bewirkenden Mittel;
- einen Schritt (E3) der Trennung der Anlage (10) zur Erzeugung von elektrischen Strom von dem Elektromotor (12), so dass der Fluss des elektrischen Stroms in den Leitungen (20, 22, 28) vollständig unterbrochen wird;
- einen Schritt (E4) der Isolierung der fehlerhaften Brennstoffzelle, während dessen die den Verbindungsleitungen (20, 22) zugeordneten Verbindungsschalter (26) direkt stromaufwärts und stromabwärts der fehlerhaften Zelle (14) in ihre Öffnungsstellung geschaltet werden, und während dessen der der Umgehungsleitung (28) zugeordnete Umgehungsschalter (30) in seine Schließstellung geschaltet wird, um die fehlerhafte Zelle (14) zu umgehen;
- einen Schritt (E5) der Wiederverbindung der Anlage (10) zur Erzeugung von elektrischem Strom mit dem Motor (12).

12. Verfahren nach dem vorhergehenden Anspruch, **dadurch gekennzeichnet, dass** während des Trennungsschritts (E3) die Brennstoffzellen (14) getrennt werden, indem das Öffnen der den Verbindungsleitungen (22), die mit den Verteilungsanschlüssen (24) verbunden sind, zugeordneten Verbindungsschalter (26) bewirkt wird.

13. Verfahren nach Anspruch 11 oder 12, **dadurch gekennzeichnet, dass** der Traktionsmotor (12) bei dem Schritt (E3) der elektrischen Trennung und dem Isolierungsschritt (E4) durch zusätzliche Elektrizitätsversorgungsmittel mit Elektrizität versorgt wird.

14. Verfahren nach dem vorhergehenden Anspruch, **dadurch gekennzeichnet, dass** die zusätzlichen Zufuhrmittel eine Batterie umfassen.

15. Verfahren nach einem der Ansprüche 11 bis 14, **dadurch gekennzeichnet, dass** es einen Schritt der Warnung des Fahrzeugführers umfasst, der ausgelöst wird, wenn während des Erfassungsschritts (E1) eine Brennstoffzelle (14) als fehlerhaft erfasst worden ist, und während dessen Warnungsmittel aktiviert sind.
